# EUROPÄISCHE PATENTSCHRIFT

(11) **EP 4 051 920 B1**
(45) Veröffentlichungstag und Bekanntmachung des Hinweises auf die Patenterteilung: **01.01.2025**
(21) Anmeldenummer: 20799988.9
(22) Anmeldetag: 15.10.2020
(51) Int. Cl.: F16D 7/02, F16F 15/00

(54) **DREHMOMENTBEGRENZER MIT EINER ROTATIONSACHSE FÜR EINEN ANTRIEBSSTRANG**
TORQUE LIMITER WITH A ROTATIONAL AXIS FOR A DRIVE TRAIN
LIMITEUR DE COUPLE DOTÉ D'UN AXE DE ROTATION POUR UNE TRANSMISSION

(30) Priorität: 29.10.2019 DE 102019129145
(43) Veröffentlichungstag der Anmeldung: 07.09.2022
(73) Patentinhaber: Schaeffler Technologies AG & Co. KG, 91074 Herzogenaurach (DE)
(72) Erfinder: KAUFMANN, Romain, 67110 Gundershoffen (FR); RUSCH, Alain, 67760 Gambsheim (FR); KESSLER, Michael, 77815 Bühl (DE)
(86) Internationale Anmeldenummer: PCT/DE2020/100893
(87) Internationale Veröffentlichungsnummer: WO 2021/083453

(56) Entgegenhaltungen:
- WO-A1-2018/109129
- WO-A1-2018/109129
- GB-A- 1 178 756
- GB-A- 1 178 756
- JP-A- 2008 303 995
- JP-A- 2008 303 995

## Beschreibung

Die Erfindung betrifft einen Drehmomentbegrenzer mit einer Rotationsachse für einen Antriebsstrang, einen Antriebsstrang mit einem solchen Drehmomentbegrenzer, sowie ein Kraftfahrzeug mit einem solchen Antriebsstrang.

Beispielsweise aus der EP 1 176 339 A1 ist ein Drehmomentbegrenzer bekannt, der eine Reibplatte umfasst, die zwischen zwei Reibbelägen liegt. Die Tellerfeder übt dabei eine Kraft von bis zu mehreren Tausend Newton aus. Die Tellerfeder und die entsprechende Kraft wird dabei in Abhängigkeit von der Drehmomentgrenze gewählt, bei deren Überschreiten Schlupf zwischen den Reibbelägen und der Reibplatte erzeugt und somit das Drehmoment begrenzt wird.

Liegen Geometriefehler vor, sind also beispielsweise die Reibbeläge, Reibplatte und/oder die Tellerfeder nicht vollsymmetrisch, ergibt sich eine in Umfangsrichtung ungleichmäßige Anpresskraft, die zu Problemen bei der Definition der Drehmomentgrenze und zu einem ungleichmäßigen Verschleiß des Drehmomentbegrenzers führt.

Aus der JP 2008 303 995 A ist ein Drehmomentbegrenzer bekannt, der auf den Oberbegriff des Anspruchs 1 lesbar ist, wobei die Druckplatten und/oder die Reibplatten schräg angestellt sind, um das vorgenannte Problem zu lösen. Falls hohe Pressungen und Geometriefehler gleichzeitig vorkommen, kann es dennoch zu einer ungleichmäßigen Pressungsverteilung kommen. Dies ist für die Konstanz des Reibwerts und Verschleißes von Nachteil.

Der vorliegenden Erfindung liegt die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft einen Drehmomentbegrenzer mit einer Rotationsachse für einen Antriebsstrang, aufweisend zumindest die folgenden Komponenten:
- zwei Deckelscheiben;
- eine Zentralscheibe, welche axial zwischen den Deckelscheiben angeordnet ist;
- zwei Reibbeläge, welche axial zwischen der Zentralscheibe und einer jeweiligen Deckelscheibe zum reibschlüssigen Übertragen eines Drehmoments zwischen der Zentralscheibe und der jeweiligen Deckelscheibe angeordnet sind;
- einen radial-äußeren Anschluss, welcher mit den Deckelscheiben dauerhaft drehmomentübertragend verbunden ist; und
- einen radial-inneren Anschluss, welcher mit der Zentralscheibe dauerhaft drehmomentübertragend verbunden ist.

Der Drehmomentbegrenzer ist vor allem dadurch gekennzeichnet, dass ein Federelement zwischen der Zentralscheibe und einem jeweiligen Reibbelag angeordnet ist.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Der Drehmomentbegrenzer umfasst zwei Deckelscheiben und eine Zentralscheibe als (mittelbar) miteinander reibschlüssig drehmomentübertragende Komponenten. Zwischen einer der Deckelscheiben und der Zentralscheibe ist jeweils ein Reibbelag vorgesehen, wobei ein solcher Reibbelag einen definierten Reibwert mit seinem Reibpartner bildet. Der Reibbelag steht mit der zugehörigen Deckelscheibe oder mit der Zentralscheibe in mittelbarem oder unmittelbarem Reibschluss, wobei die Anpresskraft zwischen dem Reibbelag und dem jeweiligen Reibpartner baulich eingestellt ist, also mittels des Abstands zwischen den Deckelscheiben. In einer Ausführungsform ist eine Mehrzahl von solchen Reibpaarungen vorgesehen, wobei jeweils zwei Deckelscheiben eine Zentralscheibe einklammern. Eine Deckelscheibe bei zwei benachbarten Reibpaarungen ist beispielsweise zeitgleich für ein Vorhalten einer Anpresskraft für beide Reibpaarungen eingerichtet.

Die Deckelscheiben sind mit einem radial-äußeren Anschluss, beispielsweise mittels einer Schwungmasse, dauerhaft drehmomentübertragend verbunden. Der radial-äußere Anschluss ist mit einer Welle, beispielsweise einer Rotorwelle einer elektrischen Maschine, dauerhaft drehmomentübertragend verbindbar beziehungsweise verbunden. Die Zentralscheibe ist mit einem radial-inneren Anschluss, beispielsweise mittels eines Tilgerelements, dauerhaft drehmomentübertragend verbunden. Der radial-innere Anschluss ist mit einer Welle, beispielsweise einer Getriebeeingangswelle eines Übersetzungsgetriebes und/oder Schaltgetriebes, dauerhaft drehmomentübertragend verbindbar beziehungsweise verbunden.

Hier ist nun vorgeschlagen, dass ein Federelement zwischen der Zentralscheibe und einem jeweiligen Reibbelag angeordnet ist. Das Federelement ist zum Vergleichmäßigen der Flächenpressung für das reibschlüssige Übertragen eines Drehmoments eingerichtet. Beispielsweise ist das Federelement nach Art einer Wellfeder gebildet, sodass bei einer geringen axialen Ausdehnung des Federelements an einer Stelle mit einem Geometriefehler der Reibbelag mit einer annähernd gleichen Anpresskraft belastet ist, wie im übrigen Bereich des Reibbelags. Damit ist der Reibbelag im Betrieb dauerhaft gleichmäßig belastet. Bevorzugt ist das Federelement, sofern kein Geometriefehler vorliegt, auf Block belastet und/oder nimmt im Betrieb nur vernachlässigbar mehr axialen Bauraum ein als die Dicke des eingesetzten Blechmaterials des Federelements.

Es wird weiterhin in einer vorteilhaften Ausführungsform des Drehmomentbegrenzers vorgeschlagen, dass axial zwischen einer der Deckelscheiben und dem zugeordneten Reibbelag eine Tellerfeder angeordnet ist.

Bei dieser Ausführungsform ist eine Tellerfeder vorgesehen, welche die erwünschte Anpresskraft allein oder im Zusammenwirken mit dem Federelement erzeugt, indem ein vorbestimmter beziehungsweise justierter Abstand zwischen den Deckelscheiben eingestellt ist. So ist also eine axiale Anpresskraft zum Erzeugen des Reibschlusses zwischen einem der Reibbeläge und dem jeweiligen Reibpartner, beispielsweise der Zentralscheibe oder der zugeordneten Deckelscheibe, mittels der Tellerfeder, bevorzugt mittels einer einzigen Tellerfeder für beide Reibbeläge, erzeugt. In einer Ausführungsform ist zwischen der Tellerfeder und zumindest einem der Reibbeläge ein Stützscheibe angeordnet, sodass von der Tellerfeder einzig mittelbar, also reibkontaktlos, die Anpresskraft auf den beziehungsweise die Reibbeläge übertragen ist.

Es wird weiterhin in einer vorteilhaften Ausführungsform des Drehmomentbegrenzers vorgeschlagen, dass das Federelement zum Erzeugen einer axialen Anpresskraft zwischen einem dem zugeordneten Reibbelag und der zugeordneten Deckelscheibe mittels der beiden Deckelscheiben axial vorgespannt ist.

Hier ist vorgeschlagen, dass die Funktion des Vergleichmäßigens der Reibkraftübertragung und das Erzeugen der gewünschten Anpresskraft in dem Federelement vereint sind. Die beiden Deckelscheiben bilden eine Kraftklammer und damit ist das Federelement axial vorgespannt. So ist also eine axiale Anpresskraft zum Erzeugen des Reibschlusses zwischen den Reibbelägen und der jeweils zugeordneten Deckelscheibe mittels des, bevorzugt einzigen, Federelements erzeugt. Bevorzugt ist das Federelement auch bei dieser Ausführungsform, sofern kein Geometriefehler vorliegt, auf Block belastet und/oder nimmt im Betrieb nur vernachlässigbar mehr axialen Bauraum ein als die Dicke des eingesetzten Blechmaterials des Federelements. Die (bei gleicher Materialwahl) größere Dicke des Blechmaterials des Federelements ist infolge des Wegfalls einer Tellerfeder mehr als kompensiert. Der benötigte axiale Bauraum ist somit im Vergleich zu vorbekannten Ausführungsformen eines Drehmomentbegrenzers deutlich reduziert.

Es wird weiterhin in einer vorteilhaften Ausführungsform des Drehmomentbegrenzers vorgeschlagen, dass einer der Reibbeläge kraftschlüssig und/oder formschlüssig mit der zugeordneten Deckelscheibe oder der Zentralscheibe drehmomentübertragend verbunden ist,
oder rein reibschlüssig rotatorisch fixiert ist.

In einer Ausführungsform sind die Reibbeläge mittelbar oder unmittelbar mit der Zentralscheibe fixiert, beispielsweise mittels Niete. In einer alternativen Ausführungsform sind die Reibbeläge mittelbar oder unmittelbar mit den Deckelscheiben fixiert, beispielsweise verklebt.

In einer anderen Ausführungsform sind die Reibbeläge weder mit den Deckelscheiben noch mit der Zentralscheibe fixiert, sondern beidseits rein reibschlüssig drehmomentübertragend verbunden.

Es wird weiterhin in einer vorteilhaften Ausführungsform des Drehmomentbegrenzers vorgeschlagen, dass zumindest eine Stützscheibe vorgesehen ist, welche zwischen einem der Reibbeläge und der Zentralscheibe oder einer der Deckelscheiben angeordnet ist,
wobei bevorzugt die Stützscheibe zwischen einem der Reibbelage und dem Federelement angeordnet ist.

Eine Stützscheibe ermöglicht ein ebenes Anliegen des betreffenden Reibbelag und dem Reibpartner, hier von der Stützscheibe gebildet, anstelle eines unmittelbaren Anliegens des betreffenden Reibbelags an der (beispielsweise gewellten) Zentralscheibe beziehungsweise an der betreffenden Deckelscheibe oder einer Tellerfeder. Beispielsweise ist mittels der Stützscheibe ein Winkelfehler bezogen auf die Rotationsachse ausgleichbar.

Mittels Einsatzes einer Stützscheibe zwischen dem Federelement und dem Reibbelag ist die Aufgabe des Erzeugens eines vorbestimmten Reibwerts und die Aufgabe des Erzeugens einer Vergleichmäßigung der Verteilung der reibschlüssigen (Anpress-) Krafteinleitung und/oder des Erzeugens der Anpresskraft voneinander separiert. Damit ist für jede der Aufgaben ein Werkstoff nach den jeweils benötigten Eigenschaften (einerseits Verschleißfestigkeit für ein Durchrutschereignis und andererseits gute Federsteifigkeit mit geringen Setzungseigenschaften) einsetzbar.

Es wird weiterhin in einer vorteilhaften Ausführungsform des Drehmomentbegrenzers vorgeschlagen, dass das Federelement von einer der Stützscheiben gebildet ist.

Mittels des (vorhergehend beschriebenen) Einsatzes der Stützscheibe als Federelement zwischen dem Reibbelag und der Zentralscheibe oder einer der Deckelscheiben ist die Aufgabe des Erzeugens einer Vergleichmäßigung der Verteilung der reibschlüssigen (Anpress-) Krafteinleitung und/oder des Erzeugens der gewünschten Anpresskraft und das Bereitstellen einer drehmomentübertragenden Verbindung zu dem radial-äußeren Anschluss beziehungsweise zu dem radial-inneren Anschluss separiert. Damit ist für jede der Aufgaben ein Werkstoff nach den jeweils benötigten Eigenschaften (einerseits unter anderem gute Federsteifigkeit mit geringen Setzungseigenschaften und andererseits eine hohe Drehmomentsteifigkeit) einsetzbar.

Es wird weiterhin in einer vorteilhaften Ausführungsform des Drehmomentbegrenzers vorgeschlagen, dass das Federelement in die Zentralscheibe integriert ist.

Indem das Federelement in die Zentralscheibe integriert ist, ist lediglich ein sehr geringer axialer Bauraum erforderlich. In einer bevorzugten Ausführungsform ist keine Stützscheibe vorgesehen und die Zentralscheibe mit den Reibbelägen in unmittelbarem Kontakt. Alternativ oder zusätzlich ist keine Tellerfeder vorgesehen, sondern das Federelement das einzige Element zum Erzeugen einer (definierten) Anpresskraft. Besonders bevorzugt ist zumindest einer der Reibbeläge, bevorzugt sind beide Reibbeläge, in unmittelbarem reibschlüssigem Kontakt mit der betreffenden Deckelscheibe.

Erfindungsgemäß umfasst die Zentralscheibe:
- einen einstückigen Ring, wobei ein Außenringabschnitt in radialer Überlappung mit den Reibbelägen in Umlaufrichtung segmentiert ist und/oder unmittelbar mit einem Torsionsschwingungsdämpfer verbunden ist;
- mehrere separate radial-äußere Segmente, welche in radialer Überlappung mit den Reibbelägen in Umlaufrichtung zueinander beabstandet angeordnet sind; und
- mehrere separate radial-innere Segmente, welche in Umlaufrichtung zueinander beabstandet angeordnet sind und unmittelbar mit dem Torsionsschwingungsdämpfer verbunden sind.

Bei dieser Ausführungsform der Zentralscheibe, bevorzugt umfassend das Federelement, ist ein einstückiger oder mehrstückiger Aufbau vorgeschlagen. Ein einstückiger Aufbau ermöglicht eine sehr geringe Anzahl separat zu montierender Bauteile eines Drehmomentbegrenzers. Ein mehrstückiger Aufbau ermöglicht eine Flexibilität in der Montagereihenfolge, Separierung der Einzelteile entsprechend ihrer Funktion (vergleiche oben Hinweis zu den Werkstoffen) und/oder eine Reduktion der Kosten aufgrund günstigerer Werkstoffe, Fertigungsverfahren und/oder Einhaltung von Fertigungstoleranzen.

Ein einstückiger Ring ist beispielsweise mittels Stanzen und Umformen in geeigneter Form aus einem Blechmaterial, bevorzugt aus einem Federstahl, fertigbar. Bevorzugt ist ein Außenringabschnitt gebildet, welcher für einen unmittelbaren axialkraftübertragenden, bevorzugt zudem reibschlüssigen, Kontakt mit den Reibbelägen eingerichtet ist. Der Außenringabschnitt ist bevorzugt in Umlaufrichtung (um die Rotationsachse) segmentiert, sodass separate Lappen oder Zungen gebildet sind, wobei bevorzugt diese Segmente des Außenringabschnitts jeweils mittels in Umlaufrichtung schmalere Brückenabschnitte mit einem radial weiter innenliegenden Ringabschnitt, beispielsweise mit einem Innenringabschnitt, verbunden ist. Damit ist beispielsweise die Steifigkeit der Segmente des Außenringabschnitts nur wenig von der Steifigkeit des radial weiter innenliegenden Ringabschnitts beeinflusst und damit auch der radial weiter innenliegenden Ringabschnitt nur wenig von einer Verformung der Segmente des Außenringabschnitts beeinflusst.

Bei einer Ausführungsform mit mehreren separaten radial-äußeren Segmenten entsprechen diese der Funktion nach dem zuvor genannten Außenringabschnitt. Beispielsweise ist ein Anbindungsabschnitt zu einem radial weiter innenliegenden Ringabschnitt, beispielsweise mit dem zuvor genannten Innenringabschnitt, vergleichbar zu einer der zuvor genannten Lappen oder Zungen beziehungsweise einem Teilabschnitt davon ausgebildet. Bei einer Ausführungsform mit mehreren separaten radial-inneren Segmenten entsprechen diese der Funktion nach dem zuvor genannten Innenringabschnitt. Beispielsweise ist ein Anbindungsabschnitt zu einem radial weiter außenliegenden Ringabschnitt, beispielsweise mit dem zuvor genannten Außenringabschnitt, vergleichbar zu einer der zuvor genannten Lappen oder Zungen beziehungsweise einem Teilabschnitt davon ausgebildet. In einer Ausführungsform sind die radial-äußeren und die radial-inneren Segmente miteinander kombiniert, beispielsweise unmittelbar miteinander verbunden.

Gemäß einem weiteren Aspekt wird ein Antriebsstrang vorgeschlagen, aufweisend zumindest eine Antriebsmaschine mit einer Maschinenwelle, zumindest einen Verbraucher und einen Drehmomentbegrenzer nach einer Ausführungsform gemäß der obigen Beschreibung, wobei die Maschinenwelle zur Drehmomentübertragung mittels des Drehmomentbegrenzers mit dem zumindest einen Verbraucher vorbestimmt begrenzt drehmomentübertragend verbunden ist.

Der Antriebsstrang ist dazu eingerichtet, ein von einer Antriebsmaschine, zum Beispiel einer Verbrennungskraftmaschine oder einer elektrischen Maschine, bereitgestelltes und über ihre Abtriebswelle abgegebenes Drehmoment für zumindest einen Verbraucher zu übertragen. Ein beispielhafter Verbraucher ist in der Anwendung in einem Kraftfahrzeug zumindest ein Vortriebsrad für den Vortrieb des Kraftfahrzeugs. In einer Ausführungsform sind eine Mehrzahl von Antriebsmaschinen vorgesehen, beispielsweise in einem Hybrid-Antriebsstrang eine Verbrennungskraftmaschine und zumindest eine elektrische Maschine, beispielsweise ein Motor-Generator. Indem in dem Antriebsstrang ein Drehmomentbegrenzer eingesetzt ist, ist die Antriebsmaschine vor einer Beschädigung infolge von Drehmomentspitzen geschützt.

Gemäß einem weiteren Aspekt wird ein Kraftfahrzeug vorgeschlagen, aufweisend einen Antriebsstrang nach einer Ausführungsform gemäß der obigen Beschreibung und zumindest ein Vortriebsrad, welches mittels des Antriebsstrangs antreibbar ist.

Die meisten Kraftfahrzeuge weisen heutzutage einen Frontantrieb auf und ordnen teilweise die Antriebsmaschine, beispielsweise eine Verbrennungskraftmaschine und/oder eine elektrische Maschine, vor der Fahrerkabine und quer zur Hauptfahrrichtung an. Der radiale Bauraum ist gerade bei einer solchen Anordnung besonders gering und es ist daher besonders vorteilhaft, einen Antriebsstrang mit Komponenten kleiner Baugröße zu verwenden. Ähnlich gestaltet sich der Einsatz eines Antriebsstrangs in motorisierten Zweirädern, für welche im Vergleich zu vorbekannten Zweirädern stets gesteigerte Leistung bei gleichbleibendem Bauraum gefordert wird. Mit der Hybridisierung der Antriebsstränge verschärft sich diese Problemstellung auch für Hinterachsanordnungen, und auch hier sowohl in Längsanordnung als auch in Queranordnung der Antriebsmaschinen.

Bei dem hier vorgeschlagenen Kraftfahrzeug mit dem oben beschriebenen Antriebsstrang ist infolge der Integration von der Funktion der Bereitstellung einer Anpresskraft beziehungsweise einer gewünschten Federkennlinie und/oder der Vergleichmäßigung der Anpresskraft in die Zentralsscheibe und/oder in eine Stützscheibe der benötigte axiale Bauraum verringert. Zugleich ist die Anzahl der Teile und damit der Montageaufwand verringerbar.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Alfa Romeo MiTo, Volkswagen Polo, Ford Ka+ oder Renault Clio. Bekannte Voll-Hybride in der Kleinwagenklasse sind der BMW i3 oder der Toyota Yaris Hybrid.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein Drehmomentbegrenzer in einer Schnittansicht mit einer Zentralscheibe mit integriertem Federelement;
- Fig. 2:: ein Drehmomentbegrenzer in einer Schnittansicht mit einer Zentralscheibe und Stützscheiben;
- Fig. 3:: ein Drehmomentbegrenzer in einer Schnittansicht mit an der Zentralscheibe vernieteten Reibbelägen;
- Fig. 4:: ein Drehmomentbegrenzer in einer Schnittansicht mit Zentralscheibe, Stützscheibe und Tellerfeder;
- Fig. 5:: ein Drehmomentbegrenzer in einer Schnittansicht mit an der Zentralscheibe vernieteten Reibbelägen, Stützscheibe und Tellerfeder;
- Fig. 6:: ein einzelnes Segment einer Zentralscheibe;
- Fig. 7:: einer Zentralscheibe als Ring;
- Fig. 8:: eine Zentralscheibe in einer Schnittansicht A-A; und
- Fig. 9:: ein Kraftfahrzeug mit einem Antriebsstrang umfassend einen Drehmomentbegrenzer.

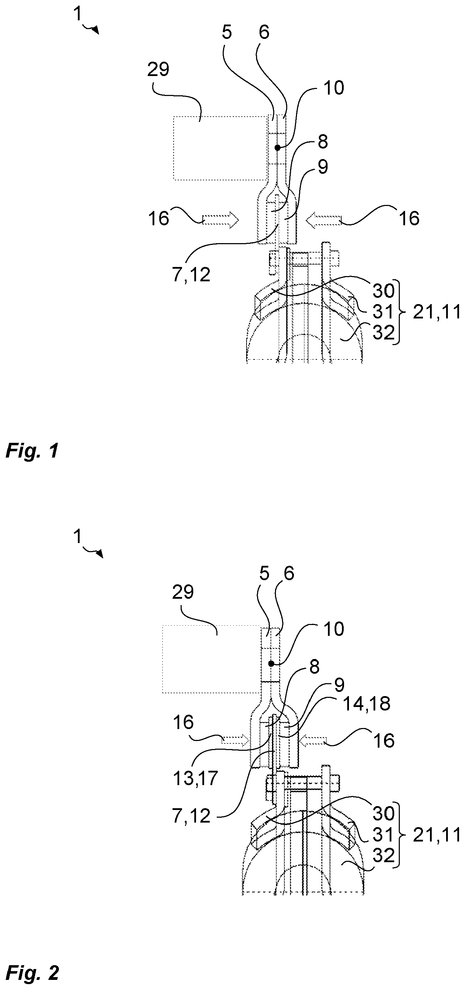

In Fig. 1 bis Fig. 5 ist ein Drehmomentbegrenzer **1** in einer schematischen Schnittansicht dargestellt. Der Drehmomentbegrenzer **1** weist eine vordere Deckelscheibe **5** (darstellungsgemäß links) und eine hintere Deckelscheibe **6** (darstellungsgemäß rechts der vorderen Deckelscheibe **5**) auf. Die Deckelscheiben **5,6** sind mit einem radial-äußeren Anschluss **10,** beispielsweise mit einem Maschinenanschluss, hier mittels eines Schwungrads **29,** drehmomentübertragend verbunden. An der nach axial-innen gerichteten Innenseite der jeweiligen Deckelscheibe **5,6,** also die einander zugewandten Oberflächen der beiden Deckelscheiben **5,6,** sind jeweils mit einem Reibbelag **8,9** in Kontakt, nämlich die vordere Deckelscheibe **5** mit dem vorderen Reibbelag **8** und die hintere Deckelscheibe **6** mit dem hinteren Reibbelag **9.** Zwischen den beiden Reibbelägen **8,9** ist eine Zentralscheibe **7** angeordnet und die Reibbeläge **8,9** sind mit der Zentralscheibe **7** in drehmomentübertragendem Kontakt. Die Zentralscheibe **7** ist mit einem radial-inneren Anschluss **11** (hier von beziehungsweise mit einem Torsionsschwingungsdämpfer **21** gebildet, beispielsweise eine Nabe mit Innenverzahnung), hier (optional) unmittelbar mit einem vorderen Seitenblech **30** und mittelbar mit einem hinteren Seitenblech **31** eines Torsionsschwingungsdämpfers **21** radial-innen verbunden. Von dem Torsionsschwingungsdämpfer **21** ist ausschnittweise weiterhin eine Dämpferfeder **32** gezeigt.

In der gezeigten Ausführungsform des Drehmomentbegrenzers **1** in Fig. 1 weist die Zentralscheibe **7** ein integriertes Federelement **12** auf. Mittels einer axialen Anpresskraft **16** ist ein Reibschluss zwischen den Reibbeläge **8,9** und der jeweils zugeordneten Deckelscheibe **5,6** erzeugt. Die Anpresskraft **16** ist bei der Montage des Drehmomentbegrenzers **1** erzeugt, indem die Deckelscheiben **5,6** entsprechend positioniert sind. Dabei wird die Zentralscheibe **7** mit dem integrierten Federelement **12** gespannt.

In Fig. 2 bis Fig. 5 sind Ausführungsformen Drehmomentbegrenzer **1** mit einem ähnlichen Aufbau gezeigt. Die dort gezeigten Drehmomentbegrenzer **1** unterscheiden sich von der Ausführungsform gemäß Fig. 1 hinsichtlich des Federelements, der Anbindung der Reibbeläge **8,9** und/oder es sind weiterhin Stützscheiben vorgesehen (vergleiche dort).

In Fig. 2 ist ein Drehmomentbegrenzer **1** gemäß Fig. 1 mit zusätzlich zwei Stützscheiben **17,18** dargestellt. Zwischen dem vorderen Reibbelag **8** und der Zentralscheibe **7** ist eine vordere Stützscheibe **17** (darstellungsgemäß links) und zwischen der Zentralscheibe **7** und dem hinteren Reibbelag **9** ist eine hintere Stützscheibe **18** (darstellungsgemäß rechts) angeordnet. Die Stützscheiben **17,18** verbessern die Kontaktpressungsverteilung und/oder schützen das integrierte Federelement **12.** In einer Ausführungsform ist mit in die Zentralscheibe **7** das Federelement **12** integriert. In einer alternativen oder ergänzenden Ausführungsform ist von der vorderen Stützscheibe **17** ein vorderes Federelement **13** und/oder von der hinteren Stützscheibe **18** ein hinteres Federelement **14** umfasst beziehungsweise gebildet. In dem Fall ist eine solche Stützscheibe **17,18** beispielsweise gewellt.

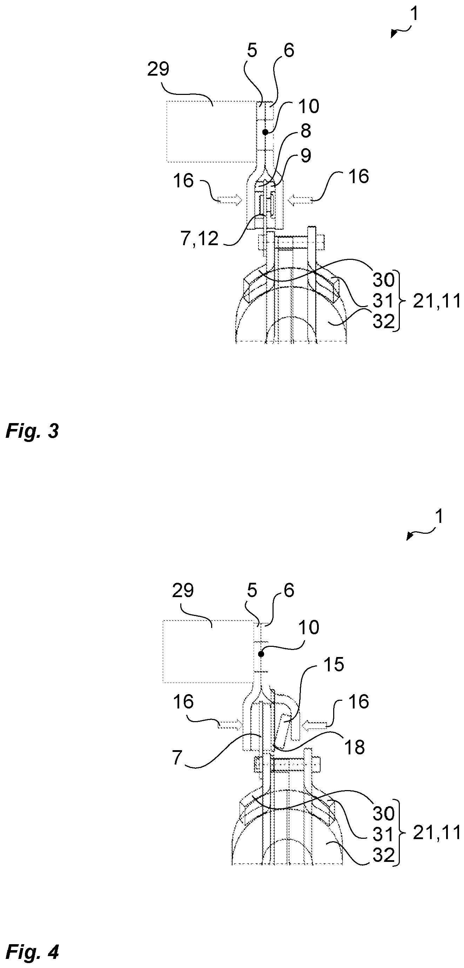

In Fig. 3 ist ein Drehmomentbegrenzer **1** gemäß Fig. 1 dargestellt, wobei die Reibbeläge **8,9** mit der Zentralscheibe **7** vernietet sind.

In Fig. 4 ist eine Ausführungsform eines Drehmomentbegrenzers **1** gezeigt, bei welcher eine Tellerfeder **15** vorgesehen ist. Die Tellerfeder **15** ist zwischen der (optional hinteren) Deckelscheibe **6** und einer (entsprechend hinteren) Stützscheibe **18** angeordnet. Die (hintere) Stützscheibe **18** ist zwischen dem hinteren Reibbelag **9** und der Tellerfeder **15** angeordnet. Hier ist nicht ausgeschlossen, dass die Zentralscheibe **7** ein integriertes Federelement **12** und/oder die Stützscheibe **18** ein (hinteres) Federelement **14** umfasst. In einer Ausführungsform ist zumindest eine weitere Stützscheibe und/oder ein weiteres Federelement vorgesehen.

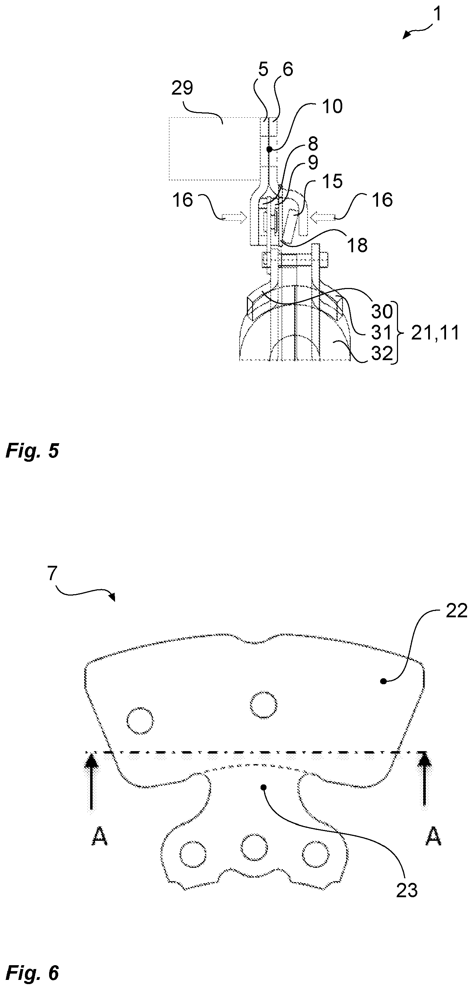

In Fig. 5 ist Drehmomentbegrenzer **1** in einer Kombination mit der Ausführungsformen gemäß Fig. 3 und Fig. 4 gezeigt.

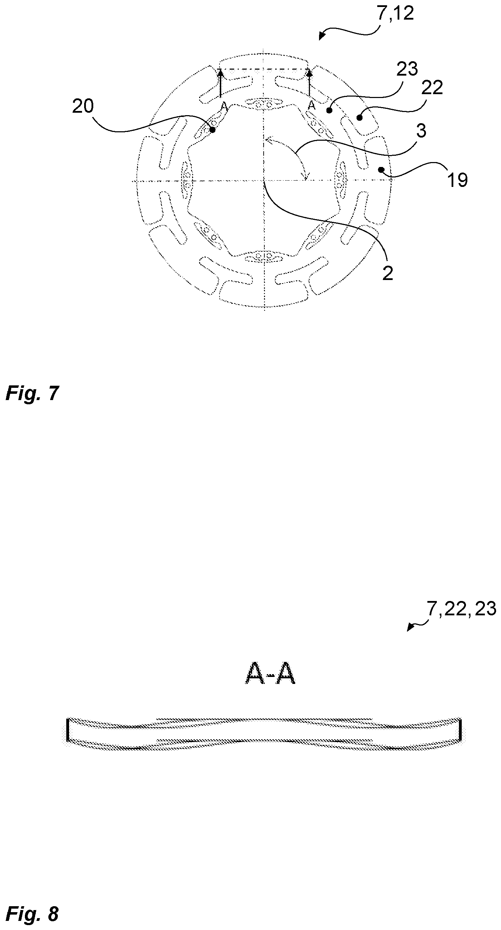

In Fig. 6 ist ein nicht erfindungsgemäßes einzelnes Segment einer Zentralscheibe **7** in einer (axialen) Draufsicht gezeigt. Das Segment ist hier einstückig gebildet und umfasst einen Abschnitt mit einem radial-äußeren Segment **22** und einen Abschnitt mit einem radial-inneren Segment **23.** Das radial-äußere Segment **22** ist im Einsatz in einem Drehmomentbegrenzer **1** (vergleiche Fig. 1 bis Fig. 5) mit den Reibbelägen **8,9** radial überlappend angeordnet, beispielsweise sind die Reibbeläge mit dem radial-äußeren Segment **22** vernietet. Das radial-innere Segment **23** ist im Einsatz in einem solchen Drehmomentbegrenzer **1,** bevorzugt mittelbar, beispielsweise mittels eines Torsionsschwingungsdämpfers **21,** mit dem radial-inneren Anschluss **11** verbunden, beispielsweise vernietet. Die vollständige Zentralscheibe **7** umfasst eine Mehrzahl solcher oder ähnlicher Segmente **22,23,** welche in Umlaufrichtung **3** (vergleiche mit der Ausführungsform gemäß Fig. 7) zueinander beabstandet angeordnet sind und so einen (mehrstückigen) Ring bilden. Hier ist eine Schnittlinie A-A dargestellt, wie die Schnittansicht des radial-äußeren Segments **22** gemäß Fig. 8 orientiert ist.

In Fig. 7 ist die Zentralscheibe **7** als einstückiger Ring, bevorzugt mit einem integriertem Federelement **12,** dargestellt. Die Zentralscheibe **7** weist eine Rotationsachse **2** mit einer Umlaufrichtung **3** auf. Im radial-äußeren Bereich der Zentralscheibe **7** befindet sich ein Außenringabschnitt **19,** welcher eine Mehrzahl von radial-äußeren Segmenten **22** gemäß Fig. 6 umfasst. Im radial-inneren Bereich ist ein Innenringabschnitt **20** gebildet, welcher dem radial-inneren Segment **23** gemäß Fig. 6 entspricht, jedoch zudem die Einstückigkeit der Zentralscheibe **7** gewährleistet. Der Innenringabschnitt **20** gewährleistet die Anbindung an den radial-inneren Anschluss **11,** beispielsweise an eines der Seitenbleche **30,31.** Hier ist optional der Bereich der Befestigung, beispielsweise Vernietung, des Innenringabschnitts **20** von dem übrigen Innenringabschnitt **20** abgesetzt, sodass dieser Bereich der Befestigung von einer Wellung (beispielsweise auch des übrigen Innenringabschnitts **20**) und/oder einer Deformation der Zentralscheibe **7** (nahezu) freigestellt ist.

Wie in Fig. 6 ist eine Schnittlinie A-A dargestellt, wie die Schnittansicht des radial-äußeren Segments **22** gemäß Fig. 8 orientiert ist.

In Fig. 8 ist ein radial-äußeres Segment **22** einer Zentralscheibe **7** in einer Schnittansicht entlang der Schnittlinie A-A (vergleiche Fig. 6 oder Fig. 7) dargestellt. Das radial-äußere Segment **22** ist hier (optional) gewellt ausgebildet und bildet somit das oder einen Teil des integrierten Federelements **12.** Mittels der gewellten Form ist die gewünschte Anpresskraft **16** (vergleiche Fig. 1 bis Fig. 5) beziehungsweise eine gewünschte Federkennlinie bereitgestellt und/oder die gewünschte Anpresskraft **16** ist vergleichmäßigt übertragen.

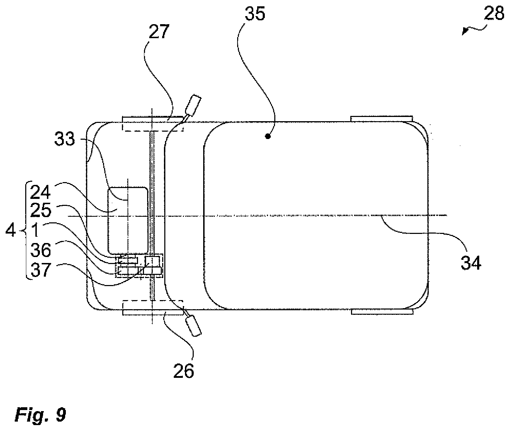

In Fig. 9 ist ein Antriebsstrang **4** in einem Kraftfahrzeug **28** mit seiner Motorachse **33** (optional) quer zur Längsachse **34** (optional) vor der Fahrerkabine **35** angeordnet. Hierbei ist der Drehmomentbegrenzer **1** eingangsseitig mit der Maschinenwelle **25** der Antriebsmaschine **24,** mit dem Übersetzungsgetriebe **36** und darauf folgend dem Differential **37** verbunden. Von dieser Antriebsmaschine **24** beziehungsweise über seine Maschinenwelle **25** wird ein Drehmoment für den Antriebsstrang **4** abgegeben. Ausgangsseitig ist der Drehmomentbegrenzer **1** mit einem rein schematisch dargestellten Abtrieb verbunden, sodass hier ein linkes Vortriebsrad **26** (Verbraucher) und ein rechtes Vortriebsrad **27** (Verbraucher) mit einem Drehmoment von der Antriebsmaschine **24** mit veränderbarer Übersetzung versorgbar sind. Die Antriebsmaschine **24** ist vor einer Drehmomentspitze, beispielsweise ausgehend von den Verbrauchern **26,27,** mittels des Drehmomentbegrenzers **1** geschützt.

Bei dem hier vorgeschlagenen Drehmomentbegrenzer ist eine hohe Konstanz des Reibwerts über eine lange Lebensdauer erzielbar.

### Bezugszeichenliste

| | | | |
|---|---|---|---|
| 1 | Drehmomentbegrenzer | 29 | Schwungrad |
| 2 | Rotationsachse | 30 | vorderes Seitenblech |
| 3 | Umlaufrichtung | 31 | hinteres Seitenblech |
| 4 | Antriebsstrang | 32 | Dämpferfeder |
| 5 | vordere Deckelscheibe | 33 | Motorachse |
| 6 | hintere Deckelscheibe | 34 | Längsachse |
| 7 | Zentralscheibe | 35 | Fahrerkabine |
| 8 | vorderer Reibbelag | 36 | Übersetzungsgetriebe |
| 9 | hinterer Reibbelag | 37 | Differential |
| 10 | radial-äußerer Anschluss | | |
| 11 | radial-innerer Anschluss | | |
| 12 | integriertes Federelement | | |
| 13 | vorderes Federelement | | |
| 14 | hinteres Federelement | | |
| 15 | Tellerfeder | | |
| 16 | Anpresskraft | | |
| 17 | vordere Stützscheibe | | |
| 18 | hintere Stützscheibe | | |
| 19 | Außenringabschnitt | | |
| 20 | Innenringabschnitt | | |
| 21 | Torsionsschwingungsdämpfer | | |
| 22 | radial-äußeres Segment | | |
| 23 | radial-inneres Segment | | |
| 24 | Antriebsmaschine | | |
| 25 | Maschinenwelle | | |
| 26 | linkes Vortriebsrad | | |
| 27 | rechtes Vortriebsrad | | |
| 28 | Kraftfahrzeug | | |

## Patentansprüche

1. Drehmomentbegrenzer (1) mit einer Rotationsachse (2) für einen Antriebsstrang (4), aufweisend zumindest die folgenden Komponenten:
- zwei Deckelscheiben (5,6);
- eine Zentralscheibe (7), welche axial zwischen den Deckelscheiben (5,6) angeordnet ist;
- zwei Reibbeläge (8,9), welche axial zwischen der Zentralscheibe (7) und einer jeweiligen Deckelscheibe (5,6) zum reibschlüssigen Übertragen eines Drehmoments zwischen der Zentralscheibe (7) und der jeweiligen Deckelscheibe (5,6) angeordnet sind;
- einen radial-äußeren Anschluss (10), welcher mit den Deckelscheiben (5,6) dauerhaft drehmomentübertragend verbunden ist; und
- einen radial-inneren Anschluss (11), welcher mit der Zentralscheibe (7) dauerhaft drehmomentübertragend verbunden ist,
wobei ein Federelement (12,13,14) zwischen der Zentralscheibe (7) und einem jeweiligen Reibbelag (8,9) angeordnet ist, **dadurch gekennzeichnet, dass** die Zentralscheibe (7) umfasst:
- einen einstückigen Ring, wobei ein Außenringabschnitt (19) in radialer Überlappung mit den Reibbelägen (8,9) in Umlaufrichtung (3) segmentiert ist und/oder unmittelbar mit einem Torsionsschwingungsdämpfer (21) verbunden ist;
- mehrere separate radial-äußere Segmente (22), welche in radialer Überlappung mit den Reibbelägen (8,9) in Umlaufrichtung (3) zueinander beabstandet angeordnet sind; und
- mehrere separate radial-innere Segmente (23), welche in Umlaufrichtung (3) zueinander beabstandet angeordnet sind und unmittelbar mit dem Torsionsschwingungsdämpfer (21) verbunden sind.

2. Drehmomentbegrenzer (1) nach Anspruch 1, wobei
axial zwischen einer der Deckelscheiben (6) und dem zugeordneten Reibbelag (9) eine Tellerfeder (15) angeordnet ist.

3. Drehmomentbegrenzer (1) nach Anspruch 1 oder 2, wobei
das Federelement (12,13,14) zum Erzeugen einer axialen Anpresskraft (16) zwischen einem dem zugeordneten Reibbelag (8,9) und der zugeordneten Deckelscheibe (5,6) mittels der beiden Deckelscheiben (5,6) axial vorgespannt ist.

4. Drehmomentbegrenzer (1) nach einem der vorhergehenden Ansprüche, wobei einer der Reibbeläge (8,9) kraftschlüssig und/oder formschlüssig mit der zugeordneten Deckelscheibe (5,6) oder der Zentralscheibe (7) drehmomentübertragend verbunden ist,
oder rein reibschlüssig rotatorisch fixiert ist.

5. Drehmomentbegrenzer (1) nach einem der vorhergehenden Ansprüche, wobei zumindest eine Stützscheibe (17,18) vorgesehen ist, welche zwischen einem der Reibbeläge (8,9) und der Zentralscheibe (7) oder einer der Deckelscheiben (5,6) angeordnet ist,
wobei bevorzugt die Stützscheibe (17,18) zwischen einem der Reibbelage (8,9) und dem Federelement (12,13,14) angeordnet ist.

6. Drehmomentbegrenzer (1) nach Anspruch 5, wobei
das Federelement (13,14) von einer der Stützscheiben (17,18) gebildet ist.

7. Drehmomentbegrenzer (1) nach einem der Ansprüche 1 bis 5, wobei das Federelement (12) in die Zentralscheibe (7) integriert ist.

8. Antriebsstrang (4), aufweisend zumindest eine Antriebsmaschine (24) mit einer Maschinenwelle (25), zumindest einen Verbraucher (26,27) und einen Drehmomentbegrenzer (1) nach einem der vorhergehenden Ansprüche, wobei die Maschinenwelle (25) zur Drehmomentübertragung mittels des Drehmomentbegrenzers (1) mit dem zumindest einen Verbraucher (26,27) vorbestimmt begrenzt drehmomentübertragend verbunden ist.

9. Kraftfahrzeug (28), aufweisend einen Antriebsstrang (4) nach Anspruch 8 und zumindest ein Vortriebsrad (26,27), welches mittels des Antriebsstrangs (4) antreibbar ist.

## Claims

1. A torque limiter (1) with a rotational axis (2) for a drive train (4), having at least the following components:
- two cover discs (5,6);
- a central disc (7) which is arranged axially between the cover discs (5,6);
- two friction linings (8,9) which are arranged axially between the central disc (7) and a respective cover disc (5,6) for the friction-locking transmission of a torque between the central disc (7) and the respective cover disc (5,6);
- a radially outer connector (10) which is permanently connected to the cover discs (5,6) in a torque-transmitting manner; and
- a radially inner connector (11) which is permanently connected to the central disc (7) in a torque-transmitting manner,
- wherein a spring element (12,13,14) is arranged between the central disc (7) and a respective friction lining (8,9), **characterised in that** the central disc (7) comprises:
- a one-piece ring, wherein an outer ring portion (19) is segmented in radial overlap with the friction linings (8,9) in the direction of rotation (3) and/or is directly connected to a torsional vibration damper (21);
- several separate radially outer segments (22) which are arranged in radial overlap with the friction linings (8,9) at a distance from one another in the direction of rotation (3); and
- several separate radially inner segments (23) which are arranged at a distance from one another in the direction of rotation (3) and are directly connected to the torsional vibration damper (21).

2. The torque limiter (1) according to claim 1, wherein
a disc spring (15) is arranged axially between one of the cover discs (6) and the associated friction lining (9).

3. The torque limiter (1) according to claim 1 or 2, wherein
the spring element (12,13,14) is axially preloaded by means of the two cover discs (5,6) in order to generate an axial contact force (16) between the associated friction lining (8,9) and the associated cover disc (5,6).

4. The torque limiter (1) according to any one of the preceding claims, wherein one of the friction linings (8,9) is connected in a force-fitting and/or form-fitting manner to the associated cover disc (5,6) or the central disc (7) in a torque-transmitting manner,
or is fixed rotationally purely in a friction-locking manner.

5. The torque limiter (1) according to any one of the preceding claims, wherein at least one support disc (17,18) is provided, which is arranged between one of the friction linings (8,9) and the central disc (7) or one of the cover discs (5,6),
wherein the support disc (17,18) is preferably arranged between one of the friction linings (8,9) and the spring element (12,13,14).

6. The torque limiter (1) according to claim 5, wherein
the spring element (13,14) is formed by one of the support discs (17,18).

7. The torque limiter (1) according to any one of claims 1 through 5, wherein the spring element (12) is integrated into the central disc (7).

8. A drive train (4), having at least one drive machine (24) with a machine shaft (25), at least one consumer (26,27) and a
torque limiter (1) according to any one of the preceding claims, wherein the machine shaft (25) is connected to the at least one consumer (26,27) in a torque-transmitting manner to a predetermined limited extent for torque transmission by means of the torque limiter (1).

9. A motor vehicle (28), having a drive train (4) according to claim 8 and at least one drive wheel (26,27), which can be driven by means of the drive train (4).

## Revendications

1. Limiteur de couple (1) doté d'un axe de rotation (2) pour une transmission (4), présentant au moins les composants suivants :
- deux disques de couverture (5, 6) ;
- un disque central (7), qui est disposé axialement entre les disques de couverture (5, 6) ;
- deux garnitures de friction (8, 9) qui sont disposées axialement entre le disque central (7) et un disque de couverture (5, 6) respectif pour transmettre par friction un couple entre le disque central (7) et le disque de couverture (5, 6) respectif ;
- une liaison radiale extérieure (10) qui est reliée en permanence aux disques de couverture (5, 6) de manière à transmettre un couple ; et
- une liaison radiale intérieure (11) qui est reliée en permanence au disque central (7) par transmission de couple,
- dans lequel un élément ressort (12, 13, 14) est disposé entre le disque central (7) et une garniture de friction (8, 9) respective, **caractérisé en ce que** le disque central (7) comprend :
- un anneau monobloc, dans lequel une section d'anneau externe (19) est segmentée en chevauchement radial avec les garnitures de friction (8, 9) dans le sens de rotation (3) et/ou reliée directement à un amortisseur de vibrations de torsion (21) ;
- une pluralité de segments radiaux extérieurs séparés (22), qui sont disposés à distance les uns des autres dans le sens de rotation (3) en chevauchement radial avec les garnitures de friction (8, 9) ; et
- plusieurs segments radiaux intérieurs séparés (23), qui sont disposés à distance les uns des autres dans le sens de rotation (3) et sont directement reliés à l'amortisseur de vibrations de torsion (21).

2. Limiteur de couple (1) selon la revendication 1, dans lequel
une rondelle ressort (15) est disposée axialement entre l'un des disques de couverture (6) et la garniture de friction (9) associée.

3. Limiteur de couple (1) selon la revendication 1 ou 2, dans lequel
l'élément ressort (12, 13, 14) est précontraint axialement pour générer une force de contact axiale (16) entre la garniture de friction associée (8, 9) et le disque de couverture associé (5, 6) au moyen des deux disques de couverture (5, 6).

4. Limiteur de couple (1) selon l'une quelconque des revendications précédentes, dans lequel l'une des garnitures de friction (8, 9) est reliée par liaison par friction et/ou par complémentarité de forme au disque de couverture (5, 6) associé ou au disque central (7) de manière à transmettre le couple,
ou est fixé en rotation simplement par friction.

5. Limiteur de couple (1) selon l'une quelconque des revendications précédentes, dans lequel au moins un disque d'appui (17, 18) est prévu, disposé entre l'une des garnitures de friction (8, 9) et le disque central (7) ou l'un des disques de couverture (5, 6),
le disque d'appui (17, 18) étant de préférence disposé entre l'une des garnitures de friction (8, 9) et l'élément ressort (12, 13, 14).

6. Limiteur de couple (1) selon la revendication 5, dans lequel
l'élément ressort (13, 14) est formé par l'un des disques d'appui (17, 18).

7. Limiteur de couple (1) selon l'une quelconque des revendications 1 à 5, dans lequel l'élément ressort (12) est intégré au disque central (7).

8. Transmission (4) comprenant au moins une machine d'entraînement (24) avec un arbre de machine (25), au moins un consommateur (26, 27) et un
Limiteur de couple (1) selon l'une quelconque des revendications précédentes, dans lequel l'arbre de machine (25) pour la transmission du couple est relié à l'au moins un consommateur (26, 27) au moyen du limiteur de couple (1) d'une manière prédéfinie pour la transmission du couple.

9. Véhicule automobile (28) présentant au moins une transmission (4) selon la revendication 8 et au moins une roue d'entraînement (26, 27) pouvant être entraînée au moyen de la transmission (4).
